(19) Europäisches Patentamt
European Patent Office
Office européen des brevets

(11) EP 2 731 021 B1

## (12) EUROPEAN PATENT SPECIFICATION

(45) Date of publication and mention
of the grant of the patent:
**22.07.2015 Bulletin 2015/30**

(51) Int Cl.:
***G06F 17/30*** (2006.01)

(21) Application number: **12191693.6**

(22) Date of filing: **07.11.2012**

(54) **Apparatus, program, and method for reconciliation processing in a graph database**

Vorrichtung, Programm und Verfahren für Abgleichverarbeitung in einer Graphdatenbank

Appareil, programme et procédé de traitement de réconciliation dans une base de données orientée graphe

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**14.05.2014 Bulletin 2014/20**

(73) Proprietor: **Fujitsu Limited**
**Kawasaki-shi, Kanagawa 211-8588 (JP)**

(72) Inventors:
• **Laera, Loredana**
 **Hayes, Middlesex UB4 8FE (GB)**
• **Hu, Bo**
 **Huntingdon, Cambridgeshire PE29 6JL (GB)**
• **Naseer, Aisha**
 **Huntingdon, Middlesex UB4 8FE (GB)**

(74) Representative: **Hutchison, James**
**Haseltine Lake LLP**
**300 High Holborn**
**London, Greater London WC1V 7JH (GB)**

(56) References cited:
**US-A1- 2009 259 652**

• **HU W ET AL: "Falcon-AO: A practical ontology matching system", WEB SEMANTICS: SCIENCE, SERVICES AND AGENTS ON THE WORLD WIDE WEB, ELSEVIER, AMSTERDAM, NL, vol. 6, no. 3, 1 September 2008 (2008-09-01), pages 237-239, XP025428993, ISSN: 1570-8268, DOI: 10.1016/J.WEBSEM.2008.02.006 [retrieved on 2008-04-11]**
• **WEI HU ET AL: "Partition-Based Block Matching of Large Class Hierarchies", 1 January 2006 (2006-01-01), THE SEMANTIC WEB - ASWC 2006 : FIRST ASIAN SEMANTIC WEB CONFERENCE, BEIJING, CHINA, SEPTEMBER 3 - 7, 2006 ; PROCEEDINGS; [LECTURE NOTES IN COMPUTER SCIENCE ; 4185], SPRINGER, BERLIN, DE, PAGE(S) 72 - 83, XP019039637, ISBN: 978-3-540-38329-1 \* abstract; figures 1-2 \* \* page 72 - page 78 \***
• **"Integrating Ontologies", Workshop Proceedings, K-Cap Conference, 2 October 2005 (2005-10-02), pages 1-102, XP055058240, Banff, Canada Retrieved from the Internet: URL:http://oaei.ontologymatching.org/doc/intont2005proceedings.pdf [retrieved on 2013-04-02]**

**Description**

The present invention lies in the field of data storage and the associated processing. Specifically, embodiments of the present invention relate to the performance of reconciliation processing of resources in a graph representation of a dataset. The reconciliation processing is intended to reconcile heterogeneity between semantically corresponding resources in the graph, for example, between new and existing graph resources.

The enormous volume of graph data available creates potential for automated or semi-automated analysis that can not only reveal statistic trends but also discover hidden patterns and distil knowledge out of data. Formal semantics plays a key role in automating computation-intensive tasks. While there is a longstanding battle over how semantics are best captured, it is widely regarded that graphs and graph-like representations are the best instrument to emulate how humans perceive the world (as an ontology with entities and relationships among entities).

Graph databases, therefore, offer the advantage of naturally presenting "semantic networks" -based knowledge representation that can store large amounts of structured and unstructured data. In implementations of graph data, such as the Open Linked Data initiative (LOD), data are generally highly heterogeneous and distributed. In many cases, the data are semantically enriched. Semantic data can be implemented using light-weight ontologies, which are readable and understandable by both human and machine. Semantic models are naturally represented as graphs, because of their ability to represent complex relationships among entities.

A graph database is a data representation which employs nodes and edges (or arcs) to represent entities, and arcs between nodes to represent relationships between those entities. Graph databases are used in a wide variety of different applications that can be generally grouped into two major categories. The first consists of complex knowledge-based systems that have large collections of concept descriptions (referred to as "knowledge-based applications"), such as intelligent decision support and self learning. The second includes applications that involve performing graph analysis over transactional data (referred to as "transactional data applications"), such as social data and business intelligence.

Typically graph data are coded as RDF triples constituting an RDF graph. A triple consists of three components: subject, predicate and object. The subject denotes the resource, and the predicate expresses a relationship between the subject and the object (which may also be considered a resource). Triples can be stored in distributed repositories known as triple stores and/or Key-Value-Stores and can be accessed/queried using a query language (e.g. SPARQL). A set of RDF triples can be viewed as a graph, where the resources occurring as subject and object are the vertices in the graph. Each triple is a directed edge that connects the subject and the object and the edge is labelled by the predicate.

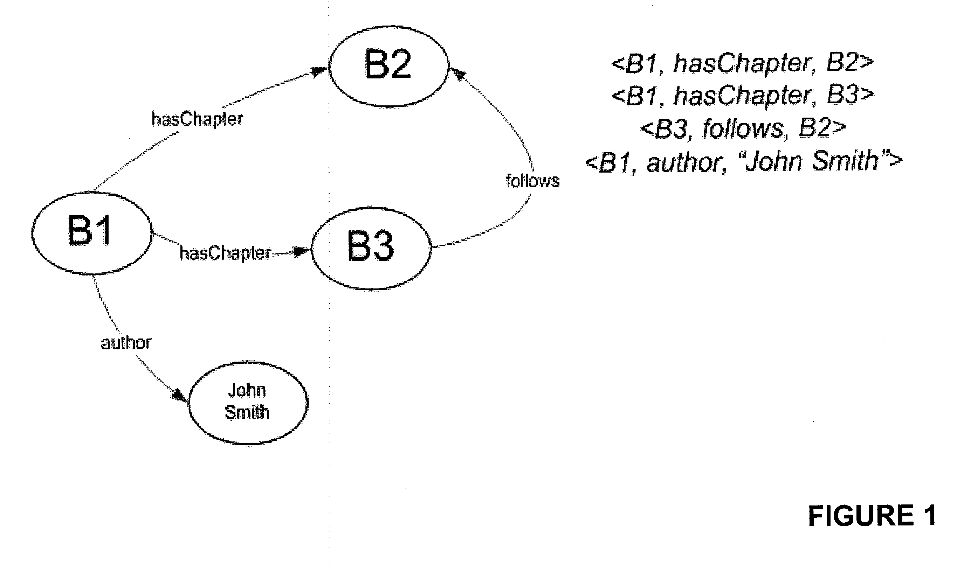

Figure 1 shows an example of a data graph as a set of four RDF triples. Resources are circles labelled with their URIs. For example, B1 is the subject of three triples, since it has three outgoing edges in the graph. The figure also shows a triple that has a literal string ("John Smith") as its object. The triples encoding the data graph are illustrated alongside the graph representation.

Linked Data requires URIs to define 'things' to be HTTP-based and to be dereferenceable. However, the decentralised nature of linked data also creates the issue that often many data sources use different resources to indicate the same real world object. A necessary and important step towards publishing and utilising LOD data is to identify these equivalent resources and reconcile multiple references to establish semantic equivalences. Hereinafter, the term "reconciliation" is used to indicate the process of reconciling heterogeneity between resources (as nodes in a graph of data, for example, as the subject or object of RDF triples) by identifying and defining equivalence links among resources that correspond semantically to each other. It follows that "reconciliation processing" is the execution and scheduling of algorithms and instructions by a processor in order to achieve reconciliation.

The significance of data reconciliation is evident. Data reconciliation ensures data integrity when heterogeneous data sets are linked (resulting in semantic variety in data). Meaningful analysis cannot be performed otherwise. Meanwhile, equivalencies allow applications to align with each other. Communications among the applications can, therefore, be automated and delegated to computers.

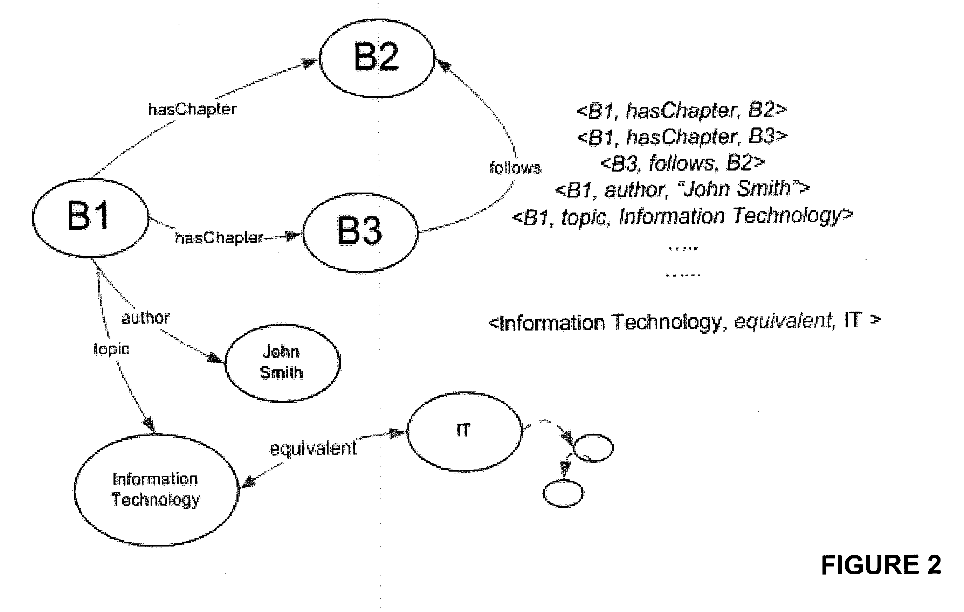

Figure 2 extends the example of Figure 1 by illustrating two graph resources which represent the same real world entity, and hence are deemed semantically equivalent. The purpose of reconciliation processing is to identify such equivalences between resources and implement equivalence links (wherein an equivalence link may be considered to be two links, a first from A to B and a second from B to A). The value of data reconciliation is evident. Equivalency allows several linked data applications to align with each other and facilitate communications among them. A data harvester can then follow these links to navigate through a potentially endless web of linked data to take advantage of the numerous data available on the internet. Given the high heterogeneity of such environment, in order to make data sources interoperable, one needs to align semantically equivalent resources.

Data reconciliation processing can be computationally expensive, particularly as the size of datasets grows.

HU W ET AL: "Falcon-AO: A practical ontology matching system", WEB SEMANTICS: SCIENCE, SERVICES AND AGENTS ON THE WORLD WIDE WEB, ELSEVIER,AMSTERDAM, NL,vol. 6, no. 3, 1 September 2008 (2008-09-01), pages 237-239, XP025428993, ISSN: 1570-8268, DOI: 10.1016/J.WEBSEM.2008.02.006, discloses a partition-based matching of large scale ontologies. First domain entities of each ontology are partitioned into a number of small clusters based on their structural proximity, and then blocks are built by assigning RDF sentences to the clusters. Blocks are matched via anchors (i.e. pre-found alignments via I-Sub) and only block pairs with high similarities are further matched by V-doc and GMO.

Embodiments of the present invention include a method for reconciling one or more target resources with a graph database, the method comprising, at a computing apparatus: obtaining a summary of the graph database as a plurality of distinct clusters each comprising one or more related graph resources; and in dependence upon an assessment of similarity between each of the distinct clusters and the one or more target resources, dividing the plurality of distinct clusters into groups including a first group of distinct clusters selected for immediate reconciliation processing and a second group of distinct clusters selected for suspended reconciliation processing, which is delayed with respect to the immediate reconciliation processing.

Advantageously, embodiments introduce flexibility to the allocation of processing resources for reconciliation processing, by prioritising the graph resources with which a target resource is to be reconciled. The prioritisation leverages clusters of similar or related resources to decide, based on characteristics of the cluster to which a graph resource belongs, whether reconciliation processing between the graph resource and a target resource should be performed on an immediate basis, or whether it should be delayed. The immediate processing is sufficient for an intermediate conclusion to be reached about to which of the graph resources, if any, a target resource is equivalent. The suspended processing can then be carried out at a later time when demand on processing resources is reduced, or below a certain threshold.

Target resources may be some or all of a target dataset being linked to the graph database. Therefore, the target resources themselves may be in the form of a graph database, that is to say graph resources or a set of linked graph resources. Target resources may be presented or selected for reconciliation processing as part of a sequence of target resources. For example, a dataset being linked to the graph database may be split into individual or groups of target graph resources, which are then presented for reconciliation processing in series.

Reconciliation processing may be performed between large data sets (that is to say, either or both of the target dataset and the graph database may be large). In such cases, equivalence links can be introduced either during or after the creation of linked datasets and they can be created manually or automatical. In existing approaches in which the whole dataset needs to be processed to gain semantic completeness when performing reconciliation processing, the use of processing resources may be inefficient, particularly in applications such as Linked Data, where data sets are usually very large, with thousands or even millions of vertices and edges. Embodiments of the present invention provide a mechanism for reducing the initial processing burden by allocating some clusters of the graph database for suspended reconciliation processing which can be performed on a flexible basis, i.e. at a time subsequent to the immediate processing when the processing environment is favourable. The processing environment may be deemed to be favourable when all of the graph resources in the target dataset have had immediate reconciliation processing performed with the graph database, and processing resources would otherwise be idle.

Reconciliation processing in itself is generally expensive in terms of resource usage. Reconciliation algorithms often perform computationally intensive operations that can be considerably time consuming. Embodiments of the present invention provide a mechanism for effective and scalable graph reconciliation to reconcile and resolve heterogeneity of the underlying information (the target dataset and the graph database). Invention embodiments provide a method and system which can be used as a platform to reconcile data entities against large graph databases in an incremental way.

In terms of reconciliation algorithms for comparing two resources and deciding whether they are equivalent, invention embodiments may make use of existing reconciliation algorithms. Embodiments of the present invention define a scheduling and prioritisation technique for reconciliation processing which enables greater flexibility in performing reconciliation processing (whatever particular algorithm is used) and hence results in more efficient use of processing resources, and a reduction in the period of time for which a graph database is unavailable for querying due to reconciliation processing. Summarising the graph in preparation for reconciliation processing enables prioritisation of certain parts of the graph database for reconciliation processing with a target resource, and hence over-commitment of computational resources to reconciliation processing upon presentation of the target resource for reconciliation processing is avoided. Priority is given to clusters of graph resources within the graph database that appear to be similar to the target resources, based on a semantic description of the clusters.

Reconciliation processing in invention embodiments may include comparing a target resource or target resources with graph resources using more than one similarity measure on different computing resources simultaneously.

In invention embodiments, the immediate reconciliation processing may include: performing reconciliation processing, the reconciliation processing including, for each of the one or more target resources: comparing the target resource with a graph resource from a particular distinct cluster in the first group to determine whether the target resource and the graph resource are equivalent, and repeating the comparing with a different graph resource from the particular distinct cluster until there are no remaining graph resources which have not yet been compared with the target resource, unless the graph resource is determined to be equivalent to the target resource, at which point the reconciliation processing for the target resource is suspended and the target resource is added to the graph with an equivalence link to the graph resource; and if no equivalent is determined in the particular distinct cluster, repeating the reconciliation processing with a different distinct cluster from the first group as the particular distinct cluster, until the target resource has been compared to every resource from each of the distinct clusters in the first group, at which point the target resource is added to the graph database.

Immediate reconciliation processing may include performing reconciliation processing, the reconciliation processing including, for each of the one or more target resources: comparing the target resource with a graph resource from a particular distinct cluster in the first group to determine whether the target resource and the graph resource are equivalent, and repeating the comparing with a different graph resource from the particular distinct cluster until one or both of two conditions is met:

a) the graph resource is determined to be equivalent to the target resource; and

b) there are no graph resources left in the particular distinct cluster with which the target resource is yet to be compared. If condition a) is satisfied, the target resource is added to the graph database with an equivalence link to the graph resource deemed equivalent. Reconciliation processing between that target resource and the remaining graph resources from the particular distinct cluster, and the remaining distinct clusters from the first group, is suspended, and treated as suspended reconciliation processing. If condition b) is satisfied, the reconciliation processing continues with a different distinct cluster from the first group as the particular distinct cluster. The reconciliation processing continues on that basis until there are no distinct clusters left in the first group with which to compare the target resource. If no graph resource is found amongst the distinct clusters of the first group that is deemed equivalent to the target resource, then the target resource is added to the graph. In other words, the target resource is added to the graph without an equivalence link, which effectively represents an assumption that the target resource does not have an equivalent, at least until the suspended reconciliation processing is carried out.

Advantageously, immediate reconciliation processing approaches such as those set out above provide a mechanism for reaching an initial conclusion about whether or not a target resource has an equivalent graph resource, and the identity of the equivalent graph resource. The initial conclusion is implemented in the graph database either by the presence of an equivalence link, or by the presence of the target resource without an equivalence link. The initial conclusion is retained as the status quo until the suspended reconciliation processing is performed, which may confirm the initial conclusion, or replace the initial conclusion. Only the processing required to reach a functional conclusion is performed up-front, and the method or system embodying the invention has the flexibility to schedule the suspended reconciliation processing as and when computing resources become available.

We note that, in the examples given throughout this document, the target resources which are compared with the graph resources may be restricted to include only the target resources which are the subject of a triple encoding the target resources.

In order to take further advantage of the similarity assessments, it may be that the distinct clusters from the first group are used as the particular distinct cluster in reconciliation processing in an order determined by their respective assessments of similarity, in descending order of similarity.

Advantageously, such embodiments leverage the assessments of similarity not merely to divide the distinct clusters into groups which dictate the priority with which their contents are compared with a target resource in reconciliation processing, but also to establish the order in which the distinct clusters are selected for reconciliation processing within those groups.

With a view to scheduling suspended reconciliation processing, invention embodiments may include monitoring processing resources of the computing apparatus and, when the monitoring indicates that the processing resources would otherwise be idle, performing suspended reconciliation processing.

Monitoring processing resources enables a decision to be made about when to perform suspended reconciliation processing. Advantageously, performing suspended reconciliation processing at a time when processing resources would otherwise be idle improves system performance by reducing the amount of reconciliation processing which is performed at a fixed time i.e. on an immediate basis when a new target resource or new target resources is/are presented. The flexibility provided by such an approach improves overall system performance by avoiding overloading processing resources and reducing bottlenecks caused by reconciliation processing. Processing resources may be, for example, a physical processor, its I/O buffers, or some other sensor which provide an indication of how loaded or otherwise the processor is.

Suspended reconciliation processing in invention embodiments may include: comparing each of the target resources with each of the graph resources with which they have not yet been compared; and if the target resource is linked to a graph resource by an equivalence link, when a graph resource is identified which is determined to be more similar to the target resource than the graph resource to which it is linked by the equivalence link, replacing the equivalence link with a new equivalence link between the target resource and the identified graph resource; and if the target resource is not linked to a graph resource by a equivalence link, when a graph resource is found which is determined to be equivalent to the target resource, adding a new equivalence link between the target resource and the found graph resource.

Advantageously, suspended reconciliation processing provides a schedule for executing a comparison (reconciliation) algorithm in a manner which confirms whether an initial equivalence link made during immediate reconciliation processing can be improved upon, or whether an assumption made at the end of reconciliation processing that a target resource has no equivalent in the graph database was correct. Depending on the extent of the second group of distinct clusters, completing suspended reconciliation processing may amount to completing exhaustive reconciliation processing for a target resource or set of target resources. However, embodiments may divide the distinct clusters into three groups, wherein the third group is not even compared with a target resource during suspended reconciliation processing, and are reserved for exhaustive reconciliation processing only.

The criterion which a comparison between a graph resource and a target resource must achieved for the two to be deemed equivalent may the same as in immediate reconciliation processing, or the threshold may be set differently. The comparison metric/algorithm/measure may be the same as that used in immediate reconciliation processing, or may be different but configured to generate a result which can be evaluated against a similarity measurement attributed to the equivalence link in order to determine whether one is more similar than the other.

Optionally, embodiments further comprise: storing the obtained summary of the graph database; and when a target resource is added to the graph database, storing an identification of the target resource in association with each of the distinct clusters having one or more graph resources which have not yet been compared with the target resource to determine whether they are equivalent.

Advantageously, storing an identification of the target resource in association with each of the distinct clusters having one or more graph resources which have not yet been compared with the target resource provides a mechanism by which suspended reconciliation processing tasks can be identified and selected for performance by the computing apparatus performing the method. Such an identification may be cached at the cluster, or may be stored centrally in a list. Furthermore, the identification may be stored with a corresponding indication of the result of the assessment of similarity between the target resource (or the set of target resources to which the target resource belonged) and the distinct cluster. Thus, suspended processing can be performed in an order determined by those assessments of similarity, in descending order, so that reconciliation which is apparently more likely to result in an equivalence link being established is performed preferentially.

As an optional mechanism for dividing the clusters into groups, invention embodiments may include, for each of the distinct clusters, generating a measurement of the similarity between the one or more target resources and the distinct cluster, and comparing the measurement with a lower limit and an upper limit, wherein, the distinct clusters selected for immediate processing are those for which the measurement is above the upper limit, and those selected for suspended processing are those for which the measurement is between the upper limit and the lower limit.

The measurement may be any quantitative indication representing the result of the assessment of similarity, but preferably is graded sufficiently to minimise the occurrence of ties between distinct clusters, without being too onerous too calculate and store. The measurements may be used for the purpose of comparisons with the upper limit and the lower limit, and may be retained for the purpose of prioritising clusters for reconciliation processing within a group of clusters. Advantageously, the setting of both an upper and lower limit enables the distinct clusters to be divided into three groups: a first which are prioritised for immediate reconciliation processing; a second which are given lower priority than any immediate reconciliation processing of target resources by the computing apparatus, and also possibly given lower priority than other processing operations, and a third group for which reconciliation processing with a target resource is only carried out in the event that exhaustive reconciliation processing for the target resource is instructed.

In terms of the process of transforming the graph database into a summary version including clusters, in invention embodiments, the process of obtaining a summary of the graph database may include: partitioning the graph database into a plurality of distinct clusters; and generating a semantic description of each of the distinct clusters; and the assessment of similarity between each of the distinct clusters and the one or more target resources is based upon a comparison of the semantic description of the distinct cluster and a semantic description of the one or more target resources.

Methods may include generating the summary in the way set out above. Advantageously, semantic description provides a way of extracting a meaningful description of graph resources in a comparable way using new or established comparison metrics without the need for human interaction. Since an equivalence link between a target resource and a graph resource denotes semantic equivalence of the two, summarising a graph cluster by semantic description to use as the basis for comparing a cluster with a target resource provides a good indication of how likely there is to be an equivalent graph resource to the target resource within a cluster.

In terms of a mechanism for obtaining the clusters, invention embodiments may include: partitioning the graph database into a plurality of distinct clusters is achieved by clustering processing including: initially setting each resource as a distinct cluster; and measuring the similarity between a semantic description of each cluster with a semantic description of every other cluster until a pair of clusters are found for which the similarity exceeds a threshold, and merging said pair of clusters into a new cluster; and the comparing and merging continues until each cluster has been measured against every other cluster or a clustering condition is satisfied.

Using the above approach to partitioning the graph database provides a hierarchical graph clustering method to group together similar vertices (graph nodes/resources/entities). By clustering, graph data is transformed into a set of smaller sub-graphs and hence the problem space for reconciliation processing is divided into chunks. Thus, a mechanism for introducing flexibility into the execution of reconciliation processing is provided. The above approach to partitioning results in groups of similar resources being in the same cluster, while resources that are different tend to be in different clusters. Since the clusters are summarised, it is not necessary for the partitioning to be absolutely successful in grouping similar resources together. However, performance improvements obtained by invention embodiments are greater if the semantic descriptions of clusters provide for meaningful comparison with the target resources. The above approach does not impose too high a processing burden in terms of forming the clusters, but is effective in tending towards grouping similar resources together and different resources apart.

The clustering condition may be, for example, a particular target number of clusters (wherein the number of clusters will start high and tend towards a lower target), an average cluster size, a maximum cluster size, or some combination of those conditions.

The above approach to partitioning can dynamically adjust as new resources or links are added to the graph database.

Furthermore, invention embodiments may include storing a representation of the plurality of distinct clusters and their respective semantic descriptions as the summary of the graph database; and updating the summary of the graph database when new resources are added to the graph database or when resources are removed from the graph database.

Such embodiments provide a dynamic basis from which to summarise the graph database and generate semantic description, taking into account characteristics of new graph resources and other changes to the graph database. The updates may be performed immediately when the graph database changes, or the updates may be stored and the summary updated in response to batches of database changes.

Once the clusters have been established, and/or target resources presented, embodiments may generate a semantic description of a cluster and/or set of target resources for similarity assessment purposes. Generating a semantic description of a resource set, being either a distinct cluster or the one or more target resources, may include reducing the resource set to a list of terms, wherein the list includes, for each resource in the resource set: the name of the resource preceded by the names of each of its ancestors as a name term; and, for each property restriction linked to the resource, the name and range of the property restriction as a property term.

In semantic networks, it is assumed that the label attributed to a graph resource will impart some meaning to the resource, and hence following hierarchical links will reveal the semantic context for a resource. In addition, the property restrictions represented in a graph database provide semantic detail about the graph resource. Thus, combining the names of linked resources (and resource beyond in the case of ancestors) provides a computationally inexpensive procedure for obtaining a semantic description of a cluster.

Furthermore, embodiments may comprise associating each of the terms in the list of terms with a weighting coefficient; wherein a first weighting coefficient is set with which each of the name terms is associated, and each of the property terms are associated with a coefficient lower than the first weighting coefficient by an amount depending upon the number of resources in the resource set linked to a property restriction having the name and range of the property term.

Weighting coefficients enable comparisons between semantic descriptions (for example, a semantic description may be a semantic description of a cluster or a semantic description of a set of target resources) which are more complex, and hence can be tailored to generate more accurate results. In particular, the weighting policy or algorithm can be set at a global or database administrator level and automatically assigned to terms within a semantic description based on factors such as how popular a term is in the graph database (the more popular a term is, the less likely it is to be telling or significant in describing a cluster, hence more popular terms are given lower weightings).

In terms of the actual comparisons between resources, in invention embodiments, comparing a graph resource and a target resource to determine whether they are equivalent includes generating a measurement of the similarity between the graph resource and the target resource based on semantic and/or structural information, and, if the measurement exceeds an equivalence threshold, determining that the graph resource and the target resource are equivalent; wherein when the target resource is not already linked to a graph resource by an equivalence link, the equivalence threshold is a predetermined threshold; and when the target resource is already linked to a graph resource by an equivalence link, the equivalence threshold is the measurement giving rise to the equivalence link.

The above procedure sets out an exemplary process for comparing a graph resource with a target resource, and reflects the different situations in which such comparisons take place. Advantageously, attributing a measurement to a similarity comparison provides for meaningful comparison between similarities later on in the reconciliation processing, to determine when a graph resource has been found which is more similar to a target resource than a graph resource to which it is currently deemed equivalent. The precise algorithm used for comparison may be any which generates a meaningful quantitative indication of similarity between two semantic entities. Some exemplary comparison techniques are set out elsewhere in this document.

Embodiments of another aspect of the invention include a computing apparatus for reconciling one or more target resources with a graph database, the computing apparatus comprising: a summary obtaining unit configured to obtain a summary of the graph database as a plurality of distinct clusters each comprising one or more related graph resources; a similarity assessment unit configured to obtain an assessment of similarity between each of the distinct clusters and the one or more target resources; and a cluster grouping unit configured to, in dependence upon the obtained assessments of similarity, divide the plurality of distinct clusters into groups including a first group of distinct clusters selected for immediate reconciliation processing and a second group of distinct clusters selected for suspended reconciliation processing, which is delayed with respect to the immediate reconciliation processing.

Furthermore, embodiments of another aspect include a computer program which, when executed by a computer, causes the computer to perform a method embodying the present invention, or causes the computer to become a computing apparatus embodying the present invention.

Although the aspects (software/methods/apparatuses) are discussed separately, it should be understood that features and consequences thereof discussed in relation to one aspect are equally applicable to the other aspects. Therefore, where a method feature is discussed, it is taken for granted that the apparatus embodiments include a unit or apparatus configured to perform that feature or provide appropriate functionality, and that programs are configured to cause a computing apparatus on which they are being executed to perform said method feature.

In any of the above aspects, the various features may be implemented in hardware, or as software modules running on one or more processors. Features of one aspect may be applied to any of the other aspects.

The invention also provides a computer program or a computer program product for carrying out any of the methods described herein, and a computer readable medium having stored thereon a program for carrying out any of the methods described herein. A computer program embodying the invention may be stored on a computer-readable medium, or it could, for example, be in the form of a signal such as a downloadable data signal provided from an Internet website, or it could be in any other form.

Preferred features of the present invention will now be described, purely by way of example, with reference to the accompanying drawings, in which:-

Figure 1 shows an example of a data graph as a set of four RDF triples;
Figure 2 extends the example of Figure 1 by illustrating two graph resources which represent the same real world entity;
Figure 3 illustrates a method embodying the present invention;
Figure 4 shows a conceptual representation of a process embodying the present invention;
Figure 5 illustrates an exemplary architecture or hardware and software setup of an invention embodiment;
Figure 6 illustrates a flow of control in a partitioning process of an invention embodiment;
Figure 7 illustrates how thresholds and similarity assessments are used to prioritise reconciliation processing in invention embodiments; and
Figure 8 sets out an exemplary flow of control for a particular immediate reconciliation processing operation of an embodiment.

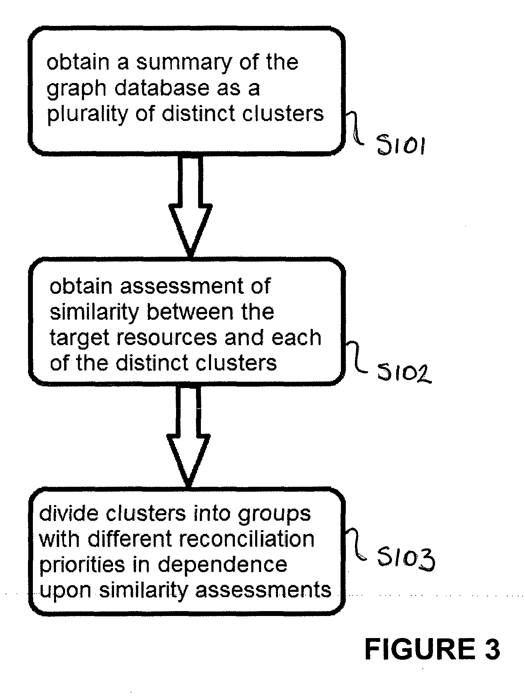

Figure 3 illustrates a method embodying the present invention. The method steps of Figure 3 are performed by a computing apparatus, and effects of the method include improving the flexibility with which the reconciliation processing is performed in order to prevent bottlenecks at the processing resources of the computing apparatus caused by having to perform too much reconciliation processing as a single operation.

The computing apparatus at which the method is performed may be a server forming part of a distributed network of servers storing the graph database, or alternatively may be the distributed network of servers itself. The computing apparatus may comprise one or a number of processing units, for example CPUs, and temporary storage areas to enable the execution of algorithms such as reconciliation processing algorithms. Furthermore, the computing apparatus may comprise one or more storage units on which the graph database is stored.

At step S101 a summary of the graph database as a plurality of distinct clusters is obtained. The graph database is the stored dataset with which target resources are being reconciled, wherein the target resources may be, for example, new graph resources to be added to the graph database. Each of the distinct clusters comprise one or more related graph resources. The summary of the graph database is obtained, which may include performing a partitioning process to generate the summary, and/or may include reading from memory a previously generated summary. In the graph database the graph resources are divided or partitioned into distinct clusters. The arcs linking the graph resources are maintained regardless of the clustering. That is to say, the clusters are distinct at least insofar as a particular resource can only be a member of a single cluster, however, arcs linking graph resources on different clusters may or may not be retained, depending on the implementation scenario.

Clustering algorithms exist for dividing a graph database into clusters of resources which can be said to be related. Such existing algorithms may be utilised in embodiments of the present invention. In addition, an exemplary clustering algorithm is set out in detail in the previous section and elsewhere in this document. Clustering algorithms compare resources, for example, based on semantic information describing the resources in the graph database, and on the basis of such comparisons group the graph resources in a manner which tends to put graph resources deemed to be similar as a result of comparison together, and graph resources deemed to be different as a result of comparison tend to be apart. By virtue of being deemed similar by a clustering algorithm a cluster of graph resources may be referred to as related.

Target resources may be some or all of a dataset being linked to the graph database. Therefore, the target resources themselves are in the form of a graph resources or a set of linked graph resources. Graph databases store data in the form of nodes and arcs, where a node represents an entity or instance, and an arc represents a relationship of some type between any two nodes. In an undirected graph, an arc from node A to node B is considered to be the same as an arc from node B to node A. In a directed graph, the two directions are treated as distinct arcs. Nodes are collectively referred to as graph resources, with the arcs being referred to as links. The use of "graph" in graph database or graph resource denotes that the data can be represented in the form of nodes and arcs. The underlying data storage method may be, for example, triples, which is a finite sequence or ordered list of three objects, each of a specified type. The subject and object of the triple represent the concept or entity (collectively referred to as 'graph resources') that are linked on the graph, and the predicate represents the arc linking the two. Denoting graph resources or links between them includes representing the graph resources or links, for example by a label, reference, or data embodying the resources or links. Target resources may also be new data which are being added to the graph database.

Optionally, the triples may be Resource Description Framework (RDF) triples. Throughout this document, it should be understood that where specific references to "RDF triple(s)" are made, it is an exemplary form of triple, conforming to the RDF standard. Furthermore, references to "triple(s)" include the possibility that the triple in question is an RDF triple. Similarly, the RDF processors discussed elsewhere in this document are exemplary of processors used for interaction between the API wrapper and the stored data items.

The Resource Description Framework is a general method for conceptual description or modeling of information that is a standard for semantic networks. Standardising the modeling of information in a semantic network allows for interoperability between applications operating on a common semantic network. RDF maintains a vocabulary with unambiguous formal semantics, by providing the RDF Schema (RDFS) as a language for describing vocabularies in RDF.

The triples provide for encoding of graph data by characterising the graph data as a plurality of subject-predicate-object expressions. In that context, the subject and object are graph nodes of the graph data, and as such are entities, objects, instances, or concepts (collectively 'graph resources'), and the predicate is a representation of a relationship between the subject and the object. The predicate asserts something about the subject by providing a specified type of link to the object. For example, the subject may denote a Web resource (for example, via a URI), the predicate denote a particular trait, characteristic, or aspect of the resource, and the object denote an instance of that trait, characteristic, or aspect. In other words, a collection of triple statements intrinsically represents directional graph data. The RDF standard provides formalised structure for such triples.

At step S102 an assessment of similarity between the target resources and each of the distinct clusters is obtained. Obtaining may include calculating or generating the assessments. An assessment of similarity between a cluster and one or more target resources (referred to as "target resources" hereinafter for ease of reference) may be based upon semantic descriptions of the cluster and the target resources. A semantic description may be generated by extracting named terms from the resources in the cluster or from the target resources, for example, the label of a graph resource (or a part of the label deemed semantically significant), and the names and ranges of the properties of that graph resource defined in the graph database may be represented as terms in the semantic description. If the summary, or a particular cluster of the summary, is unchanged since a previous reconciliation operation then it may be that a semantic description of one or more of the distinct clusters is available to be read from a storage location, in which case generating an assessment of similarity may include reading the stored semantic description of a particular cluster. Terms may be weighted based on their importance in defining a graph resource. For example, properties appearing commonly in the graph database may be deemed less important than those appearing relatively rarely. The assessment of similarity may be quantitative so that a value representing the similarity between a cluster of graph resources and the target resources is generated and stored for use elsewhere in the embodiment. Regardless of the precise details of the technique, the assessment of similarity generates, for each cluster of resources in the graph database, an indication of the similarity between the target resources and the cluster, wherein the indications are comparable in order to determine out of any pair of clusters which is more similar to the target resources, or whether they are equally similar.

At step S103 the plurality of distinct clusters are divided into groups in dependence upon an assessment of similarity between each of the distinct clusters and the one or more target resources, including a first group selected for immediate reconciliation processing and a second group selected for suspended reconciliation processing. Dividing the clusters into groups may include maintaining a list assigning cluster IDs to groups, whether it be the first group of clusters, the second group of clusters, or some other group of clusters. For example, in addition to the first and second groups, there may be a third group of clusters for which reconciliation processing is only performed if there is an explicit instruction to perform exhaustive reconciliation processing of particular target resources. As an alternative to lists, the graph summary may be stored in such a way that each cluster can be associated with a group.

Suspended reconciliation processing is delayed with respect to the immediate reconciliation processing. For example, the delay may be to allow immediate reconciliation processing to be carried out for more target resources form the same dataset as the target resources in question. Alternatively or additionally, there may be other graph operations, such as read/write operations, which require computational resources and access to the database, and methods embodying the present invention may prioritise such operations over the suspended reconciliation processing, so that suspended reconciliation processing is performed when there are no outstanding graph operations. Hence, being delayed with respect to the immediate reconciliation processing means that the suspended reconciliation processing is treated as a separate operation to the immediate reconciliation processing for scheduling purposes. That is to say, whilst the immediate reconciliation processing for a particular target resource or set of target resources is treated as a unitary operation for scheduling purposes, the suspended reconciliation processing is performed as a separate operation or set of operations on a low priority basis, and is delayed at least until there are no pending immediate reconciliation processing operations/requests.

A presentation of exemplary invention embodiments follows, including implementation options for certain elements of embodiments. The embodiments set out below provide a mechanism for aligning the intended semantics of different data sets. The creation and update of the data are mostly represented as insertion of new triples into a graph database, for example, which is stored in distributed data storage. Data reconciliation of (graphic) semantic data models is often a tedious and expensive task, due to the complex structure, and the large sizes of graphs. Embodiments utilise graph clustering to identify areas of the graph (sub-graph) in which equivalents to a target resource are likely to exist, and prioritise the scheduling of reconciliation processing on that basis.

Semantic data reconciliation is generally very expensive and time-consuming. Invention embodiments provide a platform for executing the reconciliation process in multiple stages: reconciliation of some resources (in terms of some clusters of the data graph) may be postponed for certain of the resources, in dependence upon an assessment of similarity between the cluster of graph resources and the target resources which are being reconciled with the data graph (graph database). The extent of postponement is dependent upon the processing environment, but some reconciliation processing for some clusters may be delayed until system idle time, and for other clusters until exhaustive reconciliation processing is deemed necessary by a specific instruction.

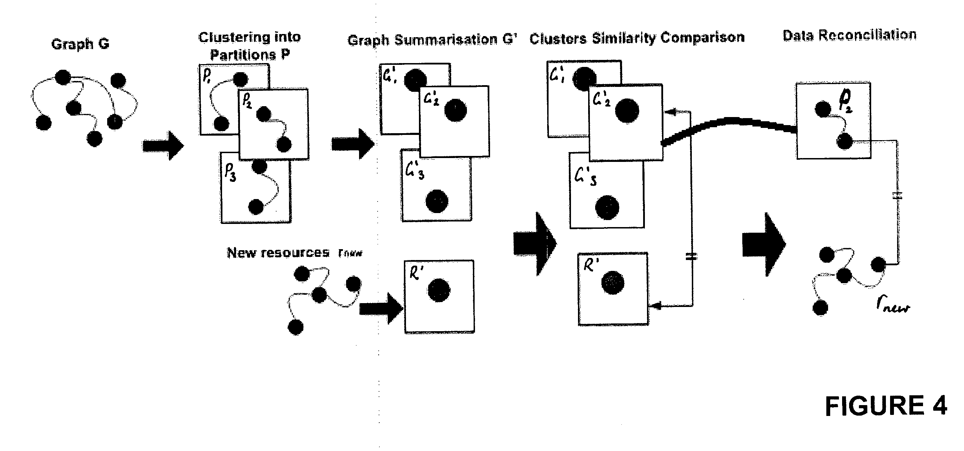

Figure 4 shows a conceptual representation of a process embodying the present invention.

Invention embodiments are presented with target resources $r_{new}$ which are to be reconciled with an existing graph database G. The process includes obtaining a representation R' of the target resources $r_{new}$ which can be assessed for similarity with clusters G' of the graph database. For example, a technique for generating a semantic description of the target resources $r_{new}$ may be used to generate the representation R'. The target resources $r_{new}$ may be one graph resource or a set of linked graph resources, for example, a set of data items with a common (the same) subject. The graph database G itself is summarised by partitioning into semantically disparate clusters P (where P is a set including all of the clusters composing the graph, P1, P2, ....), i.e. the semantic connections among clusters are much weaker than those within clusters (this is represented by the 'Clustering into Partitions P' stage in the process of Figure 4). By considering the semantic characteristics, it is possible to find the most promising clusters to start the reconciliation process. The process includes generating a semantic description of each cluster G'1, G'2, G'3, which together form a summary G' of the graph G (this is represented by the 'Graph Summarisation G'' stage in the process of Figure 4). The semantic descriptions G' can be compared, one by one, with a semantic description or other representation R' of the target resources $r_{new}$ to assess which clusters P appear semantically similar to the target resources $r_{new}$ and which appear semantically different (this is represented by the 'Clusters Similarity Comparison' stage in the process of Figure 4). Checking (comparing graph resources with target resources to determine whether they are equivalent) for graph resources in clusters which are assessed as being similar to the target resources is performed preferentially to checking with clusters assessed as being less similar. In the process illustrated in Figure 4, the semantic description of a particular cluster G'2 is assessed as being the most similar to the target resource representation R'. Therefore, the graph resources composing the cluster P2, corresponding to the semantic description G'2, are compared with the target resources $r_{new}$ on an immediate reconciliation basis (this is represented by the 'Data Reconciliation' stage in the process of Figure 4). The cluster P2 is assigned to the first group of clusters, whereas the clusters P1 and P3 are assigned for suspended reconciliation processing and hence correspond to the second group of clusters.

Reconciliation may begin when new resources arrive. New resources may be, for example, one or more triples jointly restricting the meaning (semantic definition/description) of a main target resources (denoted as $R_{new}$) and centred around $R_{new}$. An example is the vertices in Figure 4 consisting of three triples. Effectively such triples form the so-called named graph (denoted as $g_{new}$). The entire named graph is referred to as the defining context of the centred resource. When new resources arrive, the semantics is first extracted in a similar way as the graph clusters. Due to the small size of $R_{new}$, its semantic description can be generated on-the-fly when the resource is input into the system.

Hereinafter, clustering and summarisation refer to different graph operations which together form part of the process of obtaining a summary of a graph database. Clustering may be used to refer to the process of grouping graph vertices (nodes/resources) into different partitions (with no intersections). Summarisation may be used to refer to the process that virtually merges all the vertices in a cluster into one and generates a comprehensive descriptor of the merged vertex.

The goal of the summarisation is to produce a summary graph by aggregating vertices in the graph that are similar (using certain similarity measures) in an incremental way, any time there is a change on the distributed data storage, in order to facilitate reconciliation of large graph data. Obtaining a graph summary is a useful technique for aggregating vertices such that vertices within a single cluster are similar based on semantic or topologic characters, while vertices in different groups are dissimilar. By summarising a large graph, it becomes easier to discover the importance of clusters and compare and contrast against the input resources.

In embodiments, data are represented as a labelled graph G, where vertices (nodes/resources) are connected by multiple types of edges. A graph database or data graph may also be referred to as a labelled graph, and is formally defined as follows:

Definition 1. *Labelled graph.* A labelled graph is denoted as $G = (V, E, L_k)$ where $V$ is the set of vertices and $E$ is the set of edges. $L_k$ is the set of labels associated with the vertices and edges. The labels describe the properties of the elements and attributes of the vertices and edges, such as the name.

Invention embodiments utilise semantically enhanced graph clustering and summarisation. The resultant graph summary G' is more compact in size than the graph database G and simpler, and hence can quickly be compared with target resource $r_{new}$ or a summary thereof R' to provide an indication of where equivalents to the target resources might be found, and hence provide a basis for prioritising reconciliation processing. We can formally define *graph summarisation* as follows:

Definition 2. *Graph summarisation.* Given a graph $G = (V, E, L_k)$ and a partition of $V$, $P = \{P_1,...,P_k\}$, such that

$$\bigcup_{i=1}^{k} Pi = V$$ and $\forall i \neq j \, Pi \cap Pj = \emptyset$. A graph summarisation $G'$, based on the partition $P$, is then defined as $G' = (Vs, Es)$, where $Vs = P$ and $Es = \{(P_i, P_j) \exists v \in P_i, \exists u \in P_j. \, (v, u) \in E\}$.

In a summary graph, each vertex in *Vs* is a *cluster* (denoted as $C_i$), corresponds to one group of vertices in the partition of the original vertex set. *Es* may not be utilised.

Each cluster $C_i$ is associated with a semantic description $S_{C_i}$ defined as follows:

Definition 3. *Semantic description* of a *cluster.* Given a cluster $C_i$, a semantic description $S_{C_i}$ is a list of weighted terms extracted from all the resources in the cluster.

An exemplary technique for attributing weights to weighted terms in a semantic description is a TF-IDF indexing method. Wherein a semantic description is the representation of a cluster or set of target resources that are used for similarity assessments. Terms included in a semantic description come from different sources: inherited along subsumption relationships where resources are collapsed along with the relationship to the topmost ancestors, and property references including property labels and labels of resources directly linked through properties. $S_{C_i}$ is a set of concatenated labels reflecting the vertices, their neighbouring vertices, and their edges.

All terms in $S_{C_i}$ are associated with weights. A further example illustrating additional details on how a semantic description may be generated in invention embodiments is presented later in this document. The TF-IDF indexing method may attribute a weight to a term in a semantic description of a cluster which is proportional to the number of times the term appears in the cluster (assuming that duplicates of the term in the semantic description are ignored), but which is inversely proportional to the number of times the term appears in the semantic descriptions of the graph as a whole.

If two or more clusters are similar, it means that there are overlaps among the vertices in these cluster i.e. there is some semantic overlap. Cosine distance is an exemplary process for comparing two semantic descriptions, for example the semantic description of a set of target resources and the semantic description of a cluster from the graph. Cosine distance may be defined and used in the vector space model with terms weighted based on their origins (inherited along "is-a" relationship or brought in by properties) with the TF-IDF.

Definition 4. *Cluster similarity.* Given two clusters $C_s$ and $C_c$, the cluster similarity may be defined as follows:

$$similarity(C_s, C_t) = \cos(S_{C_s}, S_{C_t}) = \frac{S_{C_s} \cdot S_{C_t}}{\left\|S_{C_s}\right\| \left\|S_{C_t}\right\|}$$

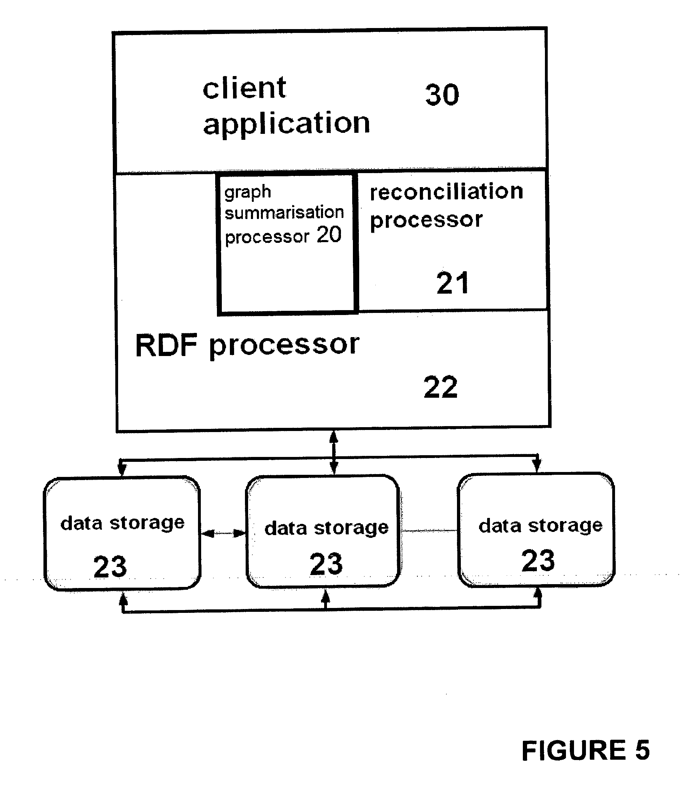

Figure 5 illustrates an exemplary architecture or hardware and software setup of an invention embodiment. The system comprises distributed data-graph storage 23, RDF processor 22, Graph Summarisation Processor 20, a Reconciliation Processor 21 and a Client application 30 (wherein the client application 30 may be considered external to the embodiment but is illustrated for explanatory purposes).

Triples encoding the graph database are stored and distributed over data-graph storage 23. The RDF processor 22 is responsible for handling RDF queries through a SPARQL engine, storing and loading triples to/from the data storage and interfacing with the Reconciliation Processor 21. The graph summarisation processor 20 is responsible for generating the graph summarisation by performing partitioning and summarisation of the partition. The graph summarisation processor 20 may also be responsible for summarising or describing the target resources, performing the similarity assessments, and dividing the clusters into groups to enable the reconciliation processor 21 to determine which of the clusters are compared with the target resources as part of immediate reconciliation processing, which as part of suspended reconciliation processing, and which should not be compared with the target resources until exhaustive reconciliation processing for the target resource is instructed. Reconciliation Processor 21 is responsible to perform data reconciliation. The client application 30 interacts with end users and relays user queries to the RDF processor 22 and Reconciliation Processor 21.

In invention embodiments, obtaining a summary of the graph database may include the steps of partitioning the graph database into a plurality of distinct clusters, and generating a semantic description of each of the distinct clusters. These steps may be collectively referred as graph summarisation. Graph summarisation is therefore a combination of graph clustering and cluster metadata generation. This is a process of distilling the most important information from a graph to produce an abridged version to enable scalable reconciliation. The approach provides a concise, coherent and indicative representation of a graph to enable reconciliation. Any graph summarisation algorithm that satisfies the definition above could potentially be used, however, an exemplary technique is set out below.

Graph partitioning and clustering may be performed prior to the arrival of target resources, for example when the system is at idle or reinforced along with storage partitioning. Therefore, the summary so generated may be read from storage when a target resource or set of target resources arrives. As an exemplary clustering process, a revised version of the structural clustering algorithm for networks (SCAN) is presented. SCAN provides flexibility to add new data items and to update the partition accordingly.

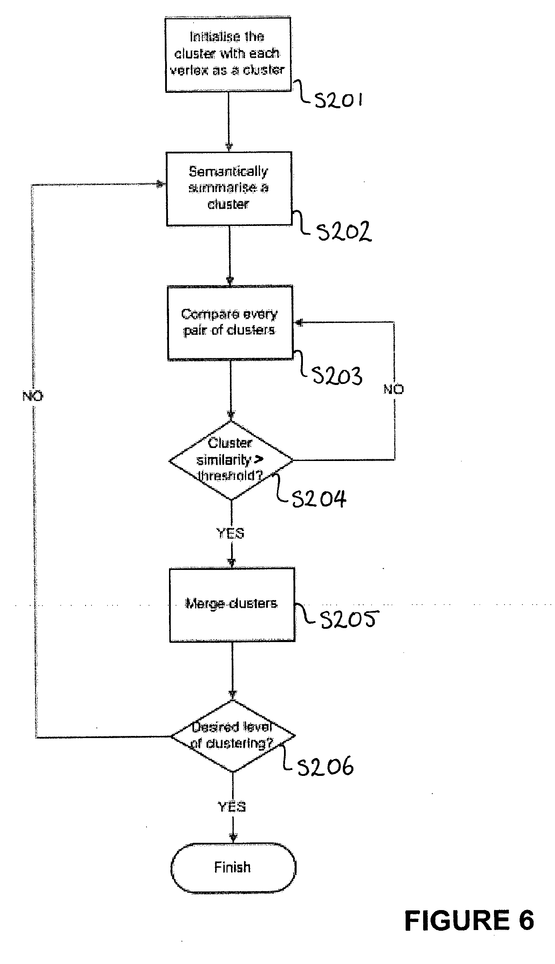

As illustrated in Figure 6, the process starts at S201 with an initial clustering with each graph vertex as an independent cluster. The flow then proceeds to S202 at which each cluster is described with a vector of terms representing the semantics of the cluster (initially the single resource represented by the vertex). More detail on generating a semantic description of a cluster is set out below. Once the clusters have been semantically summarised so that a semantic description of each is available, the flow proceeds to step S203 at which each pair of clusters is compared (or, more specifically, their semantic descriptions are compared) to identify which are the most similar pairs of clusters. For example, the 'most similar' may be the top n most similar pairs, where n is a configurable integer, or may be a proportion of the total comparisons, or there may be a threshold for similarity). Note that any ontology mapping techniques could be applied here to compute such similarity, an exemplary technique involving cosine similarity is set out elsewhere in this document. As mentioned above, a number of criteria may be applied to decide whether to merge clusters. In the particular example of Figure 6, at S204, only if the similarity between the pair of clusters is above a chosen threshold, does the flow proceed to S205 and the clusters are merged to form a new cluster. If the similarity between a pair of clusters does not exceed the threshold at step S204, then the flow returns to S203 and another pair of clusters are compared. This process continues until a clustering condition is satisfied, for example, a desired numbers of clusters are reached or the desired levels of hierarchy are obtained. Such configuration details are defined by the user or a database administrator. At S206, it is determined whether the clustering condition is satisfied, and if it is, then the clustering is deemed completer. If not, the flow returns to S202 and the clusters are summarised (or those that have changed since the last execution of S202 are summarised) and the process continues.

In invention embodiments, clusters and other sets of resources may be semantically summarised i.e. a semantic description of the cluster be generated, for comparison purposes. In invention embodiments, a semantic description may be a list of terms relevant to the cluster, and the terms may be weighted to reflect their importance. Weightings may be calculated for some or all of the terms using a standard TF-IDF indexing method. In an exemplary process for generating a semantic description of a cluster, first resources are collapsed along the subsumption (is-a) relationship to the topmost ancestors. This may be performed for each resource in a cluster, or for each resource in a cluster which is the subject of a link between two resources. For instance, if a resource "is-a" "best-author-seller" which "is-a" "author" which in turn "is-a" "human", "author" is then collapsed into its canonical form as "author.human" while "best-seller" is converted into "best-author-seller.author.human". By doing this, "is-a" relationship is well observed and is given more attention than other types of graph edges. These terms are included in the semantic description of the cluster. The semantic description may also include property references including property names and property ranges. Property plays a less significant rule in semantically restricting a resource than the subsumption relationships, and hence, when computing the weights of terms, those introduced through property references are reduced with a coefficient $0 < b < 1$. In this case TF-IDF only adjusts property references. The frequency counts the entire property label and property range label instead of individual terms making up the labels. The property label may be represented by a predicate in a triple, and the property range by an object, wherein the resource being restricted by the property is the subject. Any standard natural language processing techniques could be applied to tokenise short phrases, stem terms, and remove stop words. Thus, a semantic description of a cluster may be a vector of terms each with a weighting, wherein the weighting accorded to property restrictions of a subject resource is less than that attributed to terms reflecting subsumption relationships (denoting that one resource is a parent of another) of a subject resource. For a particular cluster having one or more graph resources which are the subject of at least one labelled link (for example, an RDF triple), the semantic description may include a term representing the name of each of those one or more subject resources concatenated in some way with the names of their respective ancestor resources, and a term representing the name and range of the property restrictions in the cluster for each of those one or more subject resources.

Once a graph summary is obtained, for example, a semantic description of each of the clusters into which the graph was partitioned, the semantic descriptions of all clusters ($C_i$ with description $S_{ci}$) and that of the new (target) resources ($R_{new}$ with description $S_r$) are compared. Note that new resources can be a set of triples and thus themselves form a graph or sub-graph, and a semantic description of the target resources may be generated to form the basis of comparisons with the semantic descriptions of the clusters. The process set out above for generating semantic descriptions of clusters can also be used for target resources. As an exemplary comparison mechanism, cosine distance of the term vectors (terms in a semantic description and their respective weights) are computed. As a result, all the existing graph clusters may be ordered based on how similar they are with $S_r$. The ordering of clusters provides a mechanism for deciding in which order the graph clusters should be selected for reconciliation processing with the target resources. Ordering may take place for the entire set of clusters composing a graph, or may be performed within the groups of clusters determined by comparisons with thresholds. That is to say, it may be that following comparison with thresholds to determine which of the clusters are selected for immediate reconciliation processing and which are selected for suspended reconciliation processing, the clusters of the first group are ordered. Calculating cluster similarity is an approximate measure and can present ties (more than one cluster which are each assessed as having an equal similarity to the target resources). As an exemplary process for deciding how to order clusters which are tied on the initial similarity assessment, the characteristics of the central vertices of a cluster can be leveraged, i.e. the cluster centre can be found based on degree of *centrality*, and compared against $S_r$. Out of the tied clusters, the cluster having a greater similarity with the target resources on the basis of the comparisons of the central vertices can be placed above the other in the ordering. Of course, it may be that ties are not broken in this way, and that tied clusters are simply ordered randomly or on some other basis. One or two different thresholds may be used for partitioning the clusters of the graph summary into groups for prioritising the reconciliation processing between the target resources and the clusters. $\alpha$ (referred to elsewhere as the upper limit) is a user defined threshold that provides the initial screening of similar clusters. Data reconciliation against vertices in the clusters whose similarity values are above this threshold will be performed immediately at the time of data insertion, hence the clusters whose similarity values are above $\alpha$ are the 'first group' of clusters referred to elsewhere in this document. Optionally a second user-defined threshold $\beta$ may be set. $\beta$ (referred to elsewhere as the lower limit) is set below $\alpha$, and can be used to filter out clusters that are deemed sufficiently dissimilar with the input resources that the resources of those clusters are only compared with the target resources when exhaustive reconciliation of the target resources is instructed. This threshold is introduced so as to improve the overall performance of the reconciliation processing method. It trims clusters that are deemed least similar whose reconciliation is given very low priority.

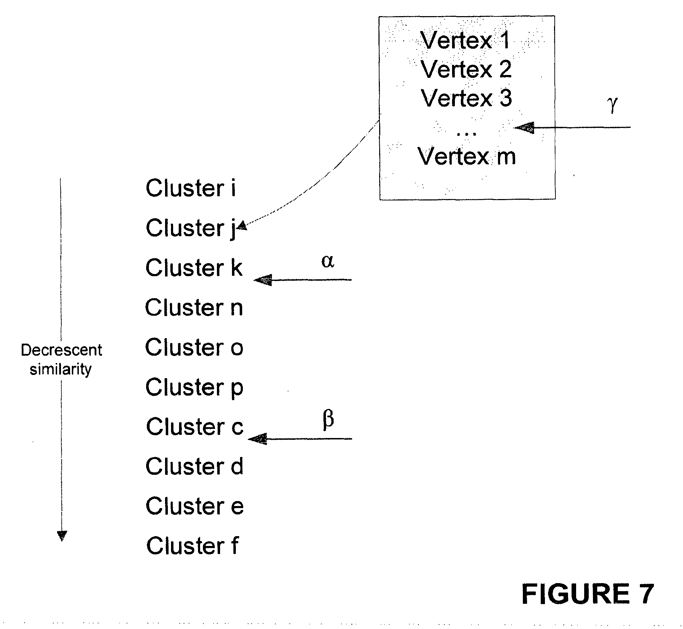

Once a group of clusters have been selected for immediate reconciliation, the individual resources within those clusters (taking each cluster in group in turn and possibly in descending order of similarity with the target resources) are compared with the target resources, or with individual resources from among the target resources. $\gamma$ is a user defined threshold to identify when a resource can be considered equivalent when performing reconciliation against individual resources within a cluster - any semantic similarity values above the threshold are considered semantically equivalent. Figure 7 illustrates how the thresholds relate to one another and to the clusters, wherein the vertices of cluster j are listed in order of similarity with a target resource, and each of vertices 1 to 3 are above the threshold for similarity. In fact, as an exemplary process, immediate reconciliation processing for a particular target resource may be suspended once a single vertex exceeding the threshold for similarity with the target resource is found. Then, during suspended reconciliation processing, each time a graph resource (vertex) is found which is more similar to the target resource than the graph resource currently deemed equivalent, the equivalence link between the target resource and the current equivalent is removed, and a new equivalence link is added between the newly-found more similar graph resource and the target resource. Alternatively, when a cluster is selected for reconciliation processing, whether that be suspended or immediate, it may be that all resources in the cluster are exhaustively iterated with all the resources in the target resources.

Once the clusters have been divided into groups, and possibly ordered within those groups, reconciliation processing proceeds with priority with respect to which clusters should have their component resources compared with the target resources when determined by the group memberships and possibly ordering within those groups. An exemplary scheduling process is set out below.

Data reconciliation processing is performed in two stages: *immediate* reconciliation processing and *delayed or suspended* reconciliation processing. The former refers to data reconciliation operation performed at the time when target resources are presented. The latter refers to reconciliation operations that are not carried out immediately but are postponed until a later stage when the time and computational resource permit, for example, when there are no pending immediate reconciliation processing operations, or no pending processing operations whatsoever. The rationale is that data reconciliation is initially performed against the most similar clusters that are similar enough with the new resources (over the predefined threshold $\alpha$).

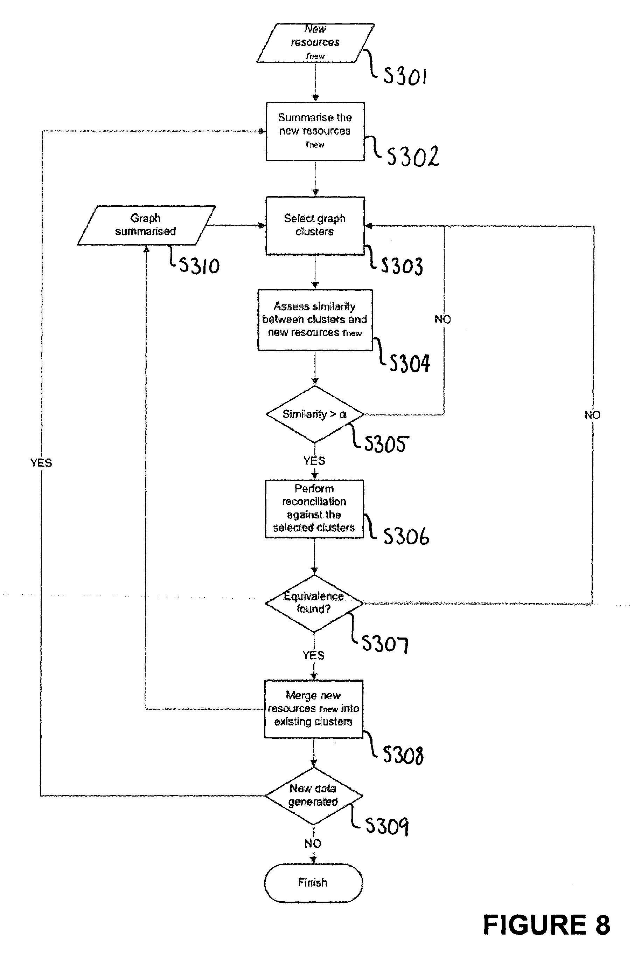

Figure 8 sets out an exemplary flow of control for a particular immediate reconciliation processing operation. It should be noted that alternative operations are set out elsewhere in this document. The procedure set out in Figure 8 is performed as a unit of processing operations, and other reconciliation processing operations are not performed until it is complete or suspended. At S301 new resources $r_{new}$ are presented (the process is initiated by the addition of new resources to the graph database, which are treated as target resources). At S302 the new resources are summarised, for example, a semantic description of $r_{new}$ is generated as set out above. At step S303 a cluster from the plurality of distinct clusters of the graph database is selected. An assessment of similarity between the selected cluster and the resources $r_{new}$ is performed at S304. At S305 the result of the assessment is compared with the threshold $\alpha$. If the threshold is exceeded, then it is deemed that the cluster belongs to the first group of clusters for which immediate reconciliation is performed, and the flow proceeds to S306. If the threshold is not met, then an identification (for example, a duplicate or a link) of $r_{new}$ is added to the selected cluster as a flag that the cluster is yet to be reconciled with $r_{new}$, and the flow returns to S303. At S306, the graph resources from the selected cluster are compared with the target resources using a reconciliation algorithm. At S307 it is checked whether any equivalences are found, for example, if a vertex of the cluster has a similarity with a target resource exceeding $\gamma$. If no equivalence is found, then the flow returns to S303, and the steps S303 to S307 are repeated until there are no further graph clusters to select or until an equivalent for each target resource is found. Once there are no further graph clusters to select, all of the immediate reconciliation processing has been performed, and the remainder is suspended. If an equivalent is found, then the flow proceeds to S308, and the target resource for which an equivalent was found is added to the graph database, which results in the graph being re-summarised at step S310, and the process between steps S303 and S309 is repeated until there are no further graph clusters to select, or until all of the target resources have been added to the graph. After S308, the flow proceeds to S309, and if further new data has been generated, then the further new data is termed $r_{new}$ and the process is repeated. Otherwise the operation is finished, and the remaining reconciliation processing is all suspended.

As another illustration of immediate reconciliation processing embodying the present invention, consider a scenario in which target resources $R_{new}$ are to be added to a graph database, and the graph database has been summarised and the assessments of similarities have all been performed. There are two different situations:

1)There are clusters whose similarity values are higher than the predefined threshold $\alpha$, for those clusters:

    a. Select the most similar cluster $C_k$ which has not been processed ($C_i$ are sorted in descendant order of their similarity w.r.t. $R_{new}$)
    b. Check every resource in $R_{new}$ against every vertex in $C_k$;
    if equivalence is found (a resource in $C_k$ with high similarity value with resource in $R_{new}$, where the similarity is greater than $\gamma$), suspend the reconciliation process;
    else continues till all the vertices in $C_k$ are exhaustively enumerated.
    c. If equivalence is not found in $C_k$, go back to step a. and reconcile against the next cluster in the sorted list; continues till all the clusters whose similarity to $R_{new}$ exceeds $\alpha$ have been processed.
    d. If equivalence is not found in any of the cluster, $R_{new}$ is considered as a separate cluster and is added to the graph database; if equivalence is found, $R_{new}$ is inserted into the corresponding cluster with an equivalence link to the found equivalent, and the cluster description is reproduced.

    Note that data reconciliation can be performed using any existing semantic alignment techniques. In case numeric value is produced, this similarity value signifies how confident any following inferences are made.
    2)There is no cluster with similarity value higher than the predefined threshold $\alpha$:

a. $R_{new}$ is considered as a separate cluster and the reconciliation process is suspended.

Note that in 1.b) and 2.a), the reconciliation processing is suspended to release computational resources for other tasks. Hence, the clusters from the first group (similarity between the cluster and $R_{new}$ above $\alpha$) which have not yet had reconciliation processing with each of the resources of $R_{new}$ performed are treated in the same way as the clusters in the second group (similarity between the cluster and $R_{new}$ above $\beta$ but below $\alpha$), and is suspended until, for example, processing resources become available. Due to the approximate nature of the proposed approach, there is no guarantee that the equivalence of $R_{new}$ does not appear in clusters that are deemed dissimilar, that is to say, clusters that belong to a third group (similarity between the cluster and $R_{new}$ below $\beta$). $R_{new}$ is cached at each cluster that has not been fully reconciled with $R_{new}$. If a cluster is in the second group, then the reconciliation with $R_{new}$ is suspended and will be performed when it is deemed that processing resources are available, or when it is deemed necessary or desirable to carry out the suspended reconciliation processing. If a cluster is in the third group, the reconciliation processing with $R_{new}$ will only be performed when a database controller or some other component instructs exhaustive reconciliation processing for $R_{new}$.

Suspended reconciliation processing may be carried out when it is determined that processing resources are idle, or that they are sufficiently available that suspended processing can be performed. Alternatively, it may be that if a cluster has pending reconciliation processing (i.e. there are target resources for which reconciliation processing with the cluster has been suspended and has not yet been carried out - which may be indicated by storing an indication of those target resources in the cache of the cluster), and that cluster is queried, then the pending reconciliation processing is performed upon accessing the cluster or cluster contents in response to a query. It is noted that after clustering each sub graph is considered relatively stable until the next clustering process. This stability is either maintained virtually as a named graph (assigning several triples to a URI) or physically in different storage or as partitions of storage disks. This is to improve graph query by putting related vertices/entities physically close to each other. The local caching can then be either associated with named graph or put on a local index-table of storage/partitions.

For clusters for which similarity between the cluster and $R_{new}$ is above $\beta$ but below $\alpha$: Given the current equivalence $s$ of $r \in R_{new}$ ($s$ has the highest similarity with $r$ among all the resources from processed clusters), a list of clusters that have not been processed ($C_k \dots C_G$), a query $q$, and a function val($q$) $\rightarrow g \subseteq G$ mapping a query to a sub-graph of the data graph:

$$\text{If } \mathrm{val}(q) \wedge C_j \in \{C_k \dots C_o\} \neq \emptyset ,$$

Retrieve the set of cached resources $\delta$ of $C_j$
Reconcile every $r \in \delta$ against vertices/resources in $C_j$
If $\exists s' \in C_j . \mathrm{sim}(s',r) > \mathrm{sim}(s,r)$, where $\mathrm{sim}(s,r)$ is an existing equivalence between $s$ and $r$
Replace the equivalence of $r$ with $s'$

Due to the inaccurate nature of semantic alignment, most reconciliation methods produce only an approximate result with a similarity value signifying the confidence level. Replacing old approximate equivalence with new ones is therefore not deemed a disadvantage of embodiments. Inference outcomes based on old equivalent relationships are still valid adjusted with the old confidence where new outcomes might present new results with higher confidence. This should not lead to unexpected system behaviour as long as the confidence levels are transparent to the end users.

Delayed or suspended reconciliation processing may also be performed at system idle time. This is formalised as follows:

For cached resources $R_j$ of $C_j \in \{C_k \dots C_o\}$, if $R_j \neq \emptyset$, for every $r' \in R_j$, reconcile $r'$ against $C_j$.

The approach ensures eventual consistency by leveraging system idle time for false negative cases. Vertices that should have been reconciled but are not in the initially selected clusters/groups are processed either during query evaluation, they are explicitly visited or during system idle time when computational resource permits. For clusters falling into the third group, that is, those whose similarity with particular target resources is assessed (on the basis of semantic descriptions of both) as being below the lower limit $\beta$, it may be that the reconciliation processing between those clusters and the particular target resources is not performed until exhaustive reconciliation processing for the particular target resources is instructed.

The computation of similarity between graph clusters and similarity between resources may be performed using, for example, a cosine similarity measure as defined previously.

**Claims**

1. A method for reconciling one or more target resources with a graph database, the method comprising, at a computing apparatus:

    obtaining (S101) a summary of the graph database as a plurality of distinct clusters each comprising one or more related graph resource, including:

        partitioning the graph database into a plurality of distinct clusters; and
        generating a semantic description of each of the distinct clusters by reducing the distinct cluster to a list of terms, wherein the list includes, for each resource in the cluster:

            the name of the resource preceded by the names of each of its ancestors as a name term;
            for each property restriction linked to the resource, the name and

        range of the property restriction as a property term; and

    the method further comprising:

        in dependence upon an assessment of similarity (S102) between each of the distinct clusters and the one or more target resources, dividing (S103) the plurality of distinct clusters into groups including a first group of distinct clusters selected for immediate reconciliation processing and a second group of distinct clusters selected for suspended reconciliation processing, which is delayed with respect to the immediate reconciliation processing, wherein the assessment of similarity is based upon a comparison of the semantic description of the distinct cluster and the semantic description of the one or more target resources.

2. A method according to claim 1,
    wherein immediate reconciliation processing includes:

    performing reconciliation processing, the reconciliation processing including, for each of the one or more target resources:

        comparing the target resource with a graph resource from a particular distinct cluster in the first group to determine whether the target resource and the graph resource are equivalent, and repeating the comparing with a different graph resource from the particular distinct cluster until there are no remaining graph resources which have not yet been compared with the target resource, unless the graph resource is determined to be equivalent to the target resource, at which point the reconciliation processing for the target resource is suspended and the target resource is added to the graph with an equivalence link to the graph resource; and if no equivalent is determined in the particular distinct cluster, repeating the reconciliation processing with a different distinct cluster from the first group as the particular distinct cluster, until the target resource has been compared to every resource from each of the distinct clusters in the first group, at which point the target resource is added to the graph database.

3. A method according to claim 2, wherein the distinct clusters from the first group are used as the particular distinct cluster in reconciliation processing in an order determined by their respective assessments of similarity, in descending order of similarity.

4. A method according to any of the preceding claims, further comprising:

    monitoring processing resources of the computing apparatus and, when the monitoring indicates that the processing resources would otherwise be idle, performing suspended reconciliation processing.

5. A method according to any of the preceding claims, wherein suspended reconciliation processing includes:

    comparing each of the target resources with each of the graph resources with which they have not yet been compared; and
    if the target resource is linked to a graph resource by a equivalence link, when a graph resource is identified which is determined to be more similar to the target resource than the graph resource to which it is linked by the equivalence link, replacing the equivalence link with a new equivalence link between the target resource and the identified graph resource; and

if the target resource is not linked to a graph resource by an equivalence link, when a graph resource is found which is determined to be equivalent to the target resource, adding a new equivalence link between the target resource and the found graph resource.

6. A method according to claim 2, further comprising:

storing the obtained summary of the graph database; and

when a target resource is added to the graph database, storing an identification of the target resource in association with each of the distinct clusters having one or more graph resources which have not yet been compared with the target resource to determine whether they are equivalent.

7. A method according to any of the preceding claims, including:

for each of the distinct clusters, generating (S304) a measurement of the similarity between the one or more target resources and the distinct cluster, and comparing (S305) the measurement with a lower limit and an upper limit;

wherein, the distinct clusters selected for immediate processing (S306) are those for which the measurement is above the upper limit, and those selected for suspended processing are those for which the measurement is between the upper limit and the lower limit.

8. A method according to claim 1, wherein
partitioning the graph database into a plurality of distinct clusters is achieved by clustering processing including:

initially setting each resource as a distinct cluster (S201); and

measuring the similarity between a semantic description of each cluster with a semantic description of every other cluster (S203) until a pair of clusters are found for which the similarity exceeds a threshold (S204), and merging said pair of clusters into a new cluster (S205); and

the comparing and merging continues until each cluster has been measured against every other cluster or a clustering condition is satisfied (S206).

9. A method according to claim 1, wherein
a representation of the plurality of distinct clusters and their respective semantic descriptions is stored as the summary of the graph database; and

the summary of the graph database is updated when new resources are added to the graph database or when resources are removed from the graph database.

10. A method according to claim 1, wherein
generating a semantic description of the one or more target resources includes reducing the one or more target resources to a list of terms, wherein the list includes, for each resource in the resource set:

the name of the resource preceded by the names of each of its ancestors as a name term;

for each property restriction linked to the resource, the name and range of the property restriction as a property term.

11. A method according to claim 9, further comprising:

associating each of the terms in the list of terms with a weighting coefficient; wherein

a first weighting coefficient is set with which each of the name terms is associated, and each of the property terms are associated with a coefficient lower than the first weighting coefficient by an amount depending upon the number of resources in the resource set linked to a property restriction having the name and range of the property term.

12. A method according to any of the preceding claims, wherein:

comparing a graph resource and a target resource to determine whether they are equivalent includes generating a measurement of the similarity between the graph resource and the target resource based on semantic and/or structural information, and, if the measurement exceeds an equivalence threshold, determining that the graph resource and the target resource are equivalent; wherein

when the target resource is not already linked to a graph resource by an equivalence link, the equivalence threshold is a predetermined threshold; and

when the target resource is already linked to a graph resource by an equivalence link, the equivalence threshold is the measurement giving rise to the equivalence link.

**13.** A computing apparatus for reconciling one or more target resources with a graph database, the computing apparatus comprising:

a summary obtaining unit (20) configured to obtain a summary of the graph database as a plurality of distinct clusters each comprising one or more related graph resources by partitioning the graph database into a plurality of distinct clusters and generating a semantic description of each of the distinct clusters by reducing the distinct cluster to a list of terms, wherein the list includes, for each resource in the cluster:

the name of the resource preceded by the names of each of its ancestors as a name term;
for each property restriction linked to the resource, the name and range of the property restriction as a property term;

the computing apparatus further comprising:

a similarity assessment unit (20) configured to obtain an assessment of similarity between each of the distinct clusters and the one or more target resources; and
a cluster grouping unit (20) configured to, in dependence upon the obtained assessments of similarity, divide the plurality of distinct clusters into groups including a first group of distinct clusters selected for immediate reconciliation processing and a second group of distinct clusters selected for suspended reconciliation processing, which is delayed with respect to the immediate reconciliation processing, wherein the assessment of similarity is based upon a comparison of the semantic description of the distinct cluster and the semantic description of the one or more target resources.

**14.** A computer program which, when executed by a computer, causes the computer to perform a method according to any of claims 1 to 12.

**Patentansprüche**

**1.** Verfahren zum Abgleichen von einer oder mehreren Zielressourcen mit einer Graphdatenbank, wobei das Verfahren umfasst, an einer Berechnungsvorrichtung:

Erhalten (S101) einer Zusammenfassung der Graphdatenbank als eine Vielzahl unterschiedlicher Cluster, die jeweils eine oder mehrere in Beziehung stehende Graphressourcen umfassen, enthaltend:

Partitionieren der Graphdatenbank in eine Vielzahl unterschiedlicher Cluster; und
Erzeugen einer semantischen Beschreibung von jedem der unterschiedlichen Cluster durch Reduzieren der unterschiedlichen Cluster auf einer Liste von Ausdrücken, wobei die Liste, für jede Ressource in dem Cluster enthält:

den Namen der Ressource, vorangestellt durch die Namen von jedem von dessen Vorgänger als ein Namenausdruck;
für jede Eigenschaftsbeschränkung, die mit der Ressource verknüpft ist, den Namen und einen Bereich der Eigenschaftsbeschränkung als ein Eigenschaftsausdruck; und

wobei das Verfahren ferner umfasst:

in Abhängigkeit von einer Beurteilung einer Ähnlichkeit (S102) zwischen jedem der unterschiedlichen Cluster und der einen oder mehreren Zielressource, Unterteilen (S103) der Vielzahl unterschiedlicher Cluster in Gruppen mit einer ersten Gruppe unterschiedlicher Cluster, die ausgewählt werden für eine unmittelbare Abgleichsverarbeitung, und eine zweite Gruppe unterschiedlicher Cluster, die ausgewählt werden für eine aufgeschobene Abgleichsverarbeitung, die mit Bezug auf die unmittelbare Abgleichsverarbeitung verzögert ist, wobei die Beurteilung einer Ähnlichkeit auf einem Vergleich der semantischen Beschreibung des unterschiedlichen Clusters und der semantischen Beschreibung der einen oder mehreren Zielressourcen basiert.

**2.** Verfahren nach Anspruch 1, wobei die unmittelbare Abgleichsverarbeitung enthält:

Durchführen einer Abgleichsverarbeitung, wobei die Abgleichsverarbeitung, für jede der einen oder mehreren Zielressourcen, enthält:

Vergleichen der Zielressource mit einer Graphressource von einem bestimmten unterschiedlichen Cluster in der ersten Gruppe zum Bestimmen, ob die Zielressource und die Graphressource äquivalent sind, und Wiederholen des Vergleichs mit einer unterschiedlichen Graphressource von dem bestimmten unterschiedlichen Cluster, bis es keine verbleibenden Graphressourcen mehr gibt, die noch nicht mit der Zielressource verglichen wurden, es sei denn, dass die Graphressource als äquivalent mit der Zielressource bestimmt wird, wobei an diesem Punkt die Abgleichsverarbeitung für die Zielressource aufgeschoben wird und die Zielressource zu dem Graph mit einer Äquivalenzverknüpfung zu der Graphressource addiert wird; und wenn in dem bestimmten unterschiedlichen Cluster kein Äquivalent bestimmt wird, Wiederholen der Abgleichsverarbeitung mit einem anderen unterschiedlichen Cluster aus der ersten Gruppe als das bestimmte unterschiedliche Cluster, bis die Zielressource mit jeder Ressource von jedem der unterschiedlichen Cluster der ersten Gruppe verglichen wurde, wobei zu diesem Zeitpunkt die Zielressource zu der Graphdatenbank addiert wird.

**3.** Verfahren nach Anspruch 2, wobei die unterschiedlichen Cluster aus der ersten Gruppe als die bestimmten unterschiedlichen Cluster in der Abgleichsverarbeitung in einer Reihenfolge verwendet werden, die bestimmt wird durch deren jeweiliger Beurteilung der Ähnlichkeit, in einer abfallenden Reihenfolge der Ähnlichkeit.

**4.** Verfahren nach einem der vorhergehenden Ansprüche, ferner umfassend:

Überwachen von Verarbeitungsressourcen der Berechnungsvorrichtung, und, wenn das Überwachen anzeigt, dass die Verarbeitungsressourcen anderweitig in Ruhe sind, Durchführen der aufgeschobenen Abgleichsverarbeitung.

**5.** Verfahren nach einem der vorhergehenden Ansprüche, wobei die aufgeschobene Abgleichsverarbeitung enthält:

Vergleichen von jeder der Zielressourcen mit jeder der Graphressourcen, mit denen diese noch nicht verglichen wurden; und
wenn die Zielressourcen mit einer Graphressource durch eine Äquivalenzverknüpfung verknüpft ist, wenn eine Graphressource identifiziert wird, die als ähnlicher zu der Zielressource bestimmt wird, als die Graphressource, mit der diese durch die Äquivalenzverknüpfung verknüpft ist, Ersetzen der Äquivalenzverknüpfung mit einer neuen Äquivalenzverknüpfung zwischen der Zielressource und der identifizierten Graphressource; und
wenn die Zielressource nicht mit einer Graphressource durch eine Äquivalenzverknüpfung verknüpft ist, wenn eine Graphressource gefunden wird, die als äquivalent mit der Zielressource bestimmt wird, Addieren einer neuen Äquivalenzverknüpfung zwischen der Zielressource und der gefundenen Graphressource.

**6.** Verfahren nach Anspruch 2, ferner umfassend:

Speichern der erhaltenen Zusammenfassung der Graphdatenbank; und
wenn eine Zielressource zu der Graphdatenbank addiert wird, Speichern einer Identifikation der Zielressource in Assoziation mit jedem der unterschiedlicher Cluster, die eine oder mehrere Graphressourcen aufweisen, die noch nicht mit der Zielressource verglichen wurden, um zu bestimmen, ob diese äquivalent sind.

**7.** Verfahren nach einem der vorhergehenden Ansprüche, umfassend:

für jedes der unterschiedlicher Cluster, Erzeugen (S304) einer Messung der Ähnlichkeit zwischen der einen oder mehreren Zielressourcen und dem unterschiedlichen Cluster, und Vergleichen (S305) der Messung mit einem unteren Grenzwert und einem oberen Grenzwert;
wobei die unterschiedlichen Cluster, die für die unmittelbare Verarbeitung (S306) ausgewählt werden, jene sind, für die die Messung oberhalb des oberen Grenzwerts sind, und jene, die für eine aufgeschobene Verarbeitung ausgewählt werden, jene sind, für die die Messung zwischen dem oberen Grenzwert und dem unteren Grenzwert sind.

8. Verfahren nach Anspruche 1, wobei
ein Partitionieren der Graphdatenbank in eine Vielzahl unterschiedlicher Cluster durch eine Clusterverarbeitung erreicht wird, die enthält:

anfängliches Einstellen jeder Ressource als ein unterschiedliches Cluster (S201); und
Messen der Ähnlichkeit zwischen einer semantischen Beschreibung von jedem Cluster mit einer semantischen Beschreibung von jedem anderen Cluster (S203), bis ein Paar von Clustern gefunden wird, für das die Ähnlichkeit einen Schwellenwert übersteigt (S204), und Zusammenfügen des Paares von Clustern in ein neues Cluster (S205);
wobei das Vergleichen und Zusammenfügen fortgesetzt wird, bis jedes Cluster gegen jedes andere Cluster gemessen wurde oder eine Clusterbedingung erfüllt ist (S206).

9. Verfahren nach Anspruch 1, wobei
eine Repräsentation der Vielzahl unterschiedlicher Cluster und deren jeweiliger semantischer Beschreibungen als die Zusammenfassung der Graphdatenbank gespeichert wird; und
wobei die Zusammenfassung der Graphdatenbank aktualisiert wird, wenn neue Ressourcen zu der Graphdatenbank addiert werden oder wenn Ressourcen von der Graphdatenbank entfernt werden.

10. Verfahren nach Anspruch 1, wobei
das Erzeugen einer semantischen Beschreibung der einen oder mehreren Zielressourcen ein Reduzieren der einen oder mehreren Zielressourcen auf eine Liste von Ausdrücken enthält, wobei die Liste enthält, für jede Ressource in dem Ressourcensatz:

den Namen der Ressource, vorangestellt durch die Namen von jedem von dessen Vorgänger als ein Namenausdruck;
für jede Eigenschaftsbeschränkung, die mit der Ressource verknüpft ist, den Namen und einen Bereich der Eigenschaftsbeschränkung als ein Eigenschaftsausdruck.

11. Verfahren nach Anspruch 9, ferner umfassend:

Assoziieren von jedem der Ausdrücke in der Liste von Ausdrücken mit einem Gewichtskoeffizienten; wobei ein erster Gewichtungskoeffizient eingestellt ist, mit dem jeder der Namenausdrücke assoziiert ist, und wobei jeder der Eigenschaftsausdrücke mit einem Koeffizienten assoziiert ist, der geringer ist als der erste Gewichtungskoeffizient um eine Größe, die von der Anzahl von Ressourcen in dem Ressourcensatz abhängt, der verbunden ist mit einer Eigenschaftsbeschränkung, die den Namen und Bereich des Eigenschaftsausdrucks aufweist.

12. Verfahren nach einem der vorhergehenden Ansprüche, wobei:

ein Vergleichen einer Graphressource und einer Zielressource zur Bestimmung, ob diese äquivalent sind, ein Erzeugen einer Messung der Ähnlichkeit zwischen der Graphressource und der Zielressource aufgrund einer semantischen und/oder strukturellen Information enthält, und, wenn die Messung einen Äquivalenzschwellenwert überschreitet, Bestimmen, dass die Graphressource und die Zielressource äquivalent sind; wobei
wenn die Zielressource nicht bereits mit einer Graphressource durch eine Äquivalenzverknüpfung verknüpft ist, der Äquivalenzschwellenwert ein vorbestimmter Schwellenwert ist; und
wenn die Zielressource bereits mit einer Graphressource durch eine Äquivalenzverknüpfung verknüpft ist, der Äquivalenzschwellenwert die Messung ist, die für die Äquivalenzverknüpfung Anlass gibt.

13. Berechnungsvorrichtung zum Ausgleichen von einer oder mehreren Zielressourcen mit einer Graphdatenbank, wobei die Berechnungsvorrichtung umfasst:

eine Zusammenfassungserhaltungseinheit (20), konfiguriert zum Erhalt einer Zusammenfassung der Graphdatenbank, als eine Vielzahl unterschiedlicher Cluster, die jeweils eine oder mehrere in Beziehung stehende Graphressourcen umfassen, durch Partitionieren der Graphdatenbank in eine Vielzahl von unterschiedlichen Clustern und Erzeugen einer semantischen Beschreibung von jedem der unterschiedlichen Cluster durch ein Reduzieren der unterschiedlichen Cluster auf einer Liste von Ausdrücken, wobei die Liste enthält, für jede Ressource in dem Cluster:

die Namen der Ressource, vorangestellt durch die Namen von jedem von dessen Vorgänger als ein Namenausdruck;
für jede Eigenschaftsbeschränkung, die mit der Ressource verknüpft ist, den Namen und Bereich der Eigenschaftsbeschränkung als ein Eigenschaftsausdruck;

wobei die Berechnungsvorrichtung ferner umfasst:

eine Ähnlichkeitsbeurteilungseinheit (20), die konfiguriert ist zum Erhalten einer Beurteilung einer Ähnlichkeit zwischen jedem der unterschiedlichen Cluster und der einen oder mehreren Zielressourcen; und
eine Clustergruppiereinheit (20), die konfiguriert ist zum, in Abhängigkeit von der erhaltenen Beurteilung der Ähnlichkeit, Unterteilen der Vielzahl unterschiedlicher Cluster in Gruppen, die eine erste Gruppe unterschiedlicher Cluster enthält, die ausgewählt sind für eine unmittelbare Ausgleichsverarbeitung, und eine zweite Gruppe verschiedener Cluster, die ausgewählt sind für eine aufgeschobene Ausgleichsverarbeitung, die bezüglich der unmittelbaren Ausgleichsverarbeitung verzögert ist, wobei die Beurteilung einer Ähnlichkeit einen Vergleich der semantischen Beschreibung der verschiedenen Cluster und der semantischen Beschreibung der einen oder mehreren Zielressourcen basiert.

14. Computerprogramm, das bei Ausführung durch einen Computer bewirkt, dass der Computer ein Verfahren nach einem der Ansprüche 1 bis 12 durchführt.

**Revendications**

1. Procédé de rapprochement d'une ou plusieurs ressources cibles avec une base de données de graphes, le procédé comprenant, au niveau d'un appareil de calcul informatique, l'étape ci-dessous consistant à :

obtenir (S101) une synthèse de la base de données de graphes sous la forme d'une pluralité de grappes distinctes comprenant chacune une ou plusieurs ressources de graphes connexes, incluant les étapes ci-dessous consistant à :

partitionner la base de données de graphes en une pluralité de grappes distinctes ; et
générer une description sémantique de chacune des grappes distinctes en réduisant la grappe distincte à une liste de termes, dans lequel la liste inclut, pour chaque ressource dans la grappe :

le nom de la ressource précédé des noms de chacun de ses ascendants en tant qu'un terme de nom ;
pour chaque restriction de propriété liée à la ressource, le nom et la plage de la restriction de propriété en

tant qu'un terme de propriété ; et

le procédé comprenant en outre l'étape ci-dessous consistant à :

en fonction d'une évaluation de similitude (S102) entre chacune des grappes distinctes et ladite une ou lesdites plusieurs ressources cibles, diviser (S103) la pluralité de grappes distinctes en des groupes incluant un premier groupe de grappes distinctes sélectionné en vue d'un traitement de rapprochement immédiat et un second groupe de grappes distinctes sélectionné en vue d'un traitement de rapprochement suspendu, lequel est retardé par rapport au traitement de rapprochement immédiat, dans lequel l'évaluation de similitude est basée sur une comparaison entre la description sémantique de la grappe distincte et la description sémantique de ladite une ou desdites plusieurs ressources cibles.

2. Procédé selon la revendication 1,
dans lequel le traitement de rapprochement immédiat comprend l'étape ci-dessous consistant à :

mettre en oeuvre un traitement de rapprochement, le traitement de rapprochement incluant, pour chacune de ladite une ou desdites plusieurs ressources cibles, les étapes ci-dessous consistant à :

comparer la ressource cible à une ressource de graphe provenant d'une grappe distincte spécifique dans le premier groupe, en vue de déterminer si la ressource cible et la ressource de graphe sont équivalentes, et répéter la comparaison avec une ressource de graphe différente provenant de la grappe distincte spécifique, jusqu'à ce qu'il n'y ait plus de ressources de graphes restantes qui n'ont pas encore été comparées à la ressource cible, à moins que la ressource de graphe ait été déterminée comme étant équivalente à la ressource cible, auquel cas le traitement de rapprochement pour la ressource cible est suspendu et la ressource cible est ajoutée au graphe avec un lien d'équivalence à la ressource de graphe ; et

si aucune équivalence n'est déterminée dans la grappe distincte spécifique, répéter le traitement de rapprochement avec une grappe distincte différente provenant du premier groupe en tant que la grappe distincte spécifique, jusqu'à ce que la ressource cible ait été comparée à toutes les ressources provenant de chacune des grappes distinctes dans le premier groupe, auquel cas la ressource cible est ajoutée à la base de données de graphes.

**3.** Procédé selon la revendication 2, dans lequel les grappes distinctes provenant du premier groupe sont utilisées en tant que la grappe distincte spécifique dans le traitement de rapprochement, dans un ordre déterminé par leurs évaluations de similitude respectives, dans l'ordre de similitude décroissant.

**4.** Procédé selon l'une quelconque des revendications précédentes, comprenant en outre l'étape ci-dessous consistant à :

surveiller des ressources de traitement de l'appareil de calcul informatique et, lorsque la surveillance indique que les ressources de traitement seraient sinon inactives, mettre en oeuvre un traitement de rapprochement suspendu.

**5.** Procédé selon l'une quelconque des revendications précédentes, dans lequel le traitement de rapprochement suspendu comprend les étapes ci-dessous consistant à :

comparer chacune des ressources cibles à chacune des ressources de graphes avec lesquelles elles n'ont pas encore été comparées ; et

si la ressource cible est liée à une ressource de graphe par un lien d'équivalence, lorsqu'une ressource de graphe est identifiée, laquelle est déterminée comme étant plus similaire à la ressource cible que la ressource de graphe à laquelle elle est liée par le lien d'équivalence, remplacer le lien d'équivalence à un nouveau lien d'équivalence entre la ressource cible et la ressource de graphe identifiée ; et

si la ressource cible n'est pas liée à une ressource de graphe par un lien d'équivalence, lorsqu'une ressource de graphe est trouvée, laquelle est déterminée comme étant équivalente à la ressource cible, ajouter un nouveau lien d'équivalence entre la ressource cible et la ressource de graphe trouvée.

**6.** Procédé selon la revendication 2, comprenant en outre les étapes ci-dessous consistant à :

stocker la synthèse obtenue de la base de données de graphes ; et

lorsqu'une ressource cible est ajoutée à la base de données de graphes, stocker une identification de la ressource cible conjointement avec chacune des grappes distinctes présentant une ou plusieurs ressources de graphes qui n'ont pas encore été comparées à la ressource cible, en vue de déterminer si elles sont équivalentes.

**7.** Procédé selon l'une quelconque des revendications précédentes, comprenant les étapes ci-dessous consistant à :

pour chacune des grappes distinctes, générer (S304) une mesure de la similitude entre ladite une ou lesdites plusieurs ressources cibles et la grappe distincte, et comparer (S305) la mesure à une limite inférieure et à une limite supérieure ;

dans lequel, les grappes distinctes sélectionnées en vue d'un traitement immédiat (S306) sont celles pour lesquelles la mesure est supérieure à la limite supérieure, et celles sélectionnées en vue d'un traitement suspendu sont celles pour lesquelles la mesure est comprise entre la limite supérieure et la limite inférieure.

**8.** Procédé selon la revendication 1, dans lequel

le partitionnement de la base de données de graphes en une pluralité de grappes distinctes est obtenu par un traitement de mise en grappes, incluant les étapes ci-dessous consistant à :

définir initialement chaque ressource en tant qu'une grappe distincte (S201) ; et

mesurer la similitude entre une description sémantique de chaque grappe et une description sémantique de chaque autre grappe (S203) jusqu'à ce qu'une paire de grappes soit trouvée pour laquelle la similitude dépasse un seuil (S204), et fusionner ladite paire de grappes dans une nouvelle grappe (S205) ; et

dans lequel la comparaison et la fusion se poursuivent jusqu'à ce que chaque grappe ait été mesurée par rapport à chaque autre grappe ou qu'une condition de mise en grappes soit satisfaite (S206).

**9.** Procédé selon la revendication 1, dans lequel
une représentation de la pluralité de grappes distinctes et de leurs descriptions sémantiques respectives est stockée sous la forme de la synthèse de la base de données de graphes ; et
la synthèse de la base de données de graphes est mise à jour lorsque de nouvelles ressources sont ajoutées à la base de données de graphes ou lorsque des ressources sont supprimées de la base de données de graphes.

**10.** Procédé selon la revendication 1, dans lequel
l'étape consistant à générer une description sémantique de ladite une ou desdites plusieurs ressources cibles consiste à réduire ladite une ou lesdites plusieurs ressources cibles à une liste de termes, dans lequel la liste inclut, pour chaque ressource dans l'ensemble de ressources :

le nom de la ressource précédé des noms de chacun de ses ascendants sous la forme d'un terme de nom ;
pour chaque restriction de propriété liée à la ressource, le nom et la plage de la restriction de propriété sous la forme d'un terme de propriété.

**11.** Procédé selon la revendication 9, comprenant en outre l'étape ci-dessous consistant à :

associer chacun des termes de la liste de termes à un coefficient de pondération ; dans lequel
un premier coefficient de pondération est défini avec lequel chacun des termes de nom est associé, et chacun des termes de propriété est associé à un coefficient inférieur au premier coefficient de pondération d'une quantité qui dépend du nombre de ressources dans l'ensemble de ressources lié à une restriction de propriété présentant le nom et la plage du terme de propriété.

**12.** Procédé selon l'une quelconque des revendications précédentes, dans lequel :

l'étape consistant à comparer une ressource de graphe et une ressource cible en vue de déterminer si elles sont équivalentes consiste à générer une mesure de la similitude entre la ressource de graphe et la ressource cible sur la base d'informations sémantiques et/ou d'informations structurelles, et, si la mesure est supérieure à un seuil d'équivalence, à déterminer que la ressource de graphe et la ressource cible sont équivalentes ; dans lequel
lorsque la ressource cible n'est pas déjà liée à une ressource de graphe par un lien d'équivalence, le seuil d'équivalence est un seuil prédéterminé ; et
lorsque la ressource cible est déjà liée à une ressource de graphe par un lien d'équivalence, le seuil d'équivalence correspond à la mesure donnant lieu au lien d'équivalence.

**13.** Appareil de calcul informatique destiné à rapprocher une ou plusieurs ressources cibles avec une base de données de graphes, l'appareil de calcul informatique comprenant :

une unité d'obtention de synthèse (20) configurée de manière à obtenir une synthèse de la base de données de graphes sous la forme d'une pluralité de grappes distinctes comprenant chacune une ou plusieurs ressources de graphes connexes, en partitionnant la base de données de graphes en une pluralité de grappes distinctes, et en générant une description sémantique de chacune des grappes distinctes en réduisant la grappe distincte à une liste de termes, dans lequel la liste inclut, pour chaque ressource dans la grappe :

le nom de la ressource précédé des noms de chacun de ses ascendants en tant qu'un terme de nom ;
pour chaque restriction de propriété liée à la ressource, le nom et la plage de la restriction de propriété en tant qu'un terme de propriété ; et

l'appareil de calcul informatique comprenant en outre :

une unité d'évaluation de similitude (20) configurée de manière à obtenir une évaluation de similitude entre chacune des grappes distinctes et ladite une ou lesdites plusieurs ressources cibles ; et

une unité de regroupement de grappes (20) configurée de manière à, en fonction des évaluations de similitude obtenues, diviser la pluralité de grappes distinctes en des groupes incluant un premier groupe de grappes distinctes sélectionné en vue d'un traitement de rapprochement immédiat et un second groupe de grappes distinctes sélectionné en vue d'un traitement de rapprochement suspendu, lequel est retardé par rapport au traitement de rapprochement immédiat, dans lequel l'évaluation de similitude est basée sur une comparaison entre la description sémantique de la grappe distincte et la description sémantique de ladite une ou desdites plusieurs ressources cibles.

14. Programme informatique qui, lorsqu'il est exécuté par un ordinateur, amène l'ordinateur à mettre en oeuvre un procédé selon l'une quelconque des revendications 1 à 12.

<B1, hasChapter, B2>
<B1, hasChapter, B3>
<B3, follows, B2>
<B1, author, "John Smith">

hasChapter

hasChapter

follows

B2

B1

B3

author

John Smith

**FIGURE 1**

EP 2 731 021 B1

**FIGURE 2**

<B1, hasChapter, B2>
<B1, hasChapter, B3>
<B3, follows, B2>
<B1, author, "John Smith">
<B1, topic, Information Technology>

<Information Technology, equivalent, IT >

B2

B3

B1

John Smith

Information Technology

IT

hasChapter

follows

hasChapter

author

topic

equivalent

obtain a summary of the
graph database as a
plurality of distinct clusters

S101

obtain assessment of
similarity between the
target resources and each
of the distinct clusters

S102

divide clusters into groups
with different reconciliation
priorities in dependence
upon similarity assessments

S103

**FIGURE 3**

FIGURE 4

| client application | 30 |
| graph summarisation processor 20 | reconciliation processor 21 |
| RDF processor | 22 |

| data storage 23 | data storage 23 | data storage 23 |

**FIGURE 5**

Initialise the
cluster with each
vertex as a cluster
S201

Semantically
summarise a
cluster
S202

Compare every
pair of clusters
S203

NO

Cluster
similarity >
threshold?
S204

NO

YES

Merge clusters
S205

Desired level
of clustering?
S206

YES

Finish

**FIGURE 6**

Vertex 1
Vertex 2
Vertex 3
...
Vertex m

$\gamma$

Cluster i

Cluster j

Cluster k        $\alpha$

Cluster n

Decrescent
similarity        Cluster o

Cluster p

Cluster c        $\beta$

Cluster d

Cluster e

Cluster f

**FIGURE 7**

New
resources
r<sub>new</sub>  S301

Summarise the
new resources
r<sub>new</sub>  S302

Graph
summarised  S310

Select graph
clusters  S303

Assess similarity
between clusters and
new resources r<sub>new</sub>  S304

Similarity > α  S305

NO

NO

YES

Perform
reconciliation
against the
selected clusters  S306

Equivalence
found?  S307

YES

Merge new
resources r<sub>new</sub> into
existing clusters  S308

New data
generated  S309

NO

YES

Finish

**FIGURE 8**

**EP 2 731 021 B1**

**Non-patent literature cited in the description**

- Falcon-AO: A practical ontology matching system. **HU W et al.** WEB SEMANTICS: SCIENCE, SERVICES AND AGENTS ON THE WORLD WIDE WEB. ELSEVIER, 01 September 2008, vol. 6, 237-239